(19) Europäisches Patentamt
European Patent Office
Office européen des brevets

(11) **EP 2 771 832 B1**

(12) **EUROPEAN PATENT SPECIFICATION**

(45) Date of publication and mention
of the grant of the patent:
**23.05.2018 Bulletin 2018/21**

(21) Application number: **11776709.5**

(22) Date of filing: **26.10.2011**

(51) Int Cl.:
***G06F 21/31*** *(2013.01)* ***H04L 29/06*** *(2006.01)*

(86) International application number:
**PCT/EP2011/005404**

(87) International publication number:
**WO 2013/060345 (02.05.2013 Gazette 2013/18)**

(54) **TYPING PROFILE IDENTIFICATION**

TYPISIERUNGSPROFILIDENTIFIZIERUNG

IDENTIFICATION D'UN PROFIL DE FRAPPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.09.2014 Bulletin 2014/36**

(73) Proprietor: **TM3 Software GmbH
93049 Regensburg (DE)**

(72) Inventors:
• **WÖLFL, Thomas
93049 Regensburg (DE)**

• **THUMANN, Werner
93186 Pettendorf (DE)**

(74) Representative: **Graf von Stosch, Andreas et al
Graf von Stosch
Patentanwaltsgesellschaft mbH
Prinzregentenstraße 22
80538 München (DE)**

(56) References cited:
**US-A1- 2008 092 209**

**Description**

The present invention relates to a method for extracting a typing profile from a typing sample input by a user, and to a method for comparing a typing profile with a reference typing profile of another user. The invention further relates to a system for identifying a user according to a typing sample input by the user.

When a person is asked to type a text on a keyboard, each person types the text in an individual manner. The way the person presses and releases the various keys of the keyboard can be regarded as a biometric feature of the person who is typing the text. Like a fingerprint, the typing behavior of a person is a highly individual feature. When two different people type a text, the typing behavior differs significantly.

U. S. Patent Application US 2008/0092209 A1 relates to a user authentication system and discloses a system for determining whether a purported or alleged authorized user is in fact the authorized user, by comparing a new data on a real-time basis against probability distribution representations including an authorized user probability distribution representation and global or wide population probability distribution representation, to prove a probability as to whether the purported authorized user is the authorized user. This invention may utilize keyboard dynamics, data, X-Y device data, or other data from similar measurable characteristics, to determine the probability that the new data from the purported authorized user indicates or identifies that user as the authorized user.

It is an object of the invention to provide an improved method for evaluating a typing sample of a user.

The object of the invention is solved by the independent claims. Further embodiments are described in the dependent claims.

According to embodiments of the present invention, a method for extracting a typing profile from a typing sample input by a user is provided. The method comprises recording a typing sample when the user types an arbitrary text, wherein said recording comprises recording points of time when the user presses or releases keys. The method further comprises extracting from the typing sample a multitude of time periods, the time periods comprising at least one of holding periods of the various keys that have been pressed and transition periods between two different keys. The method further comprises taking the holding periods of a certain key or the transition periods for a certain pair of keys as realizations of a random variable, and

performing a kernel density estimation to determine a probability density function related to the holding periods of said key or to the transition periods for said pair of keys. The preceding step is performed for a multitude of different keys or pairs of keys. The method further comprises representing the user's typing profile as a set of probability density functions related to said multitude of different keys or pairs of keys.

The above-described method for extracting a typing profile yields typing profiles which characterizes the respective user's typing behavior. Hence, a typing profile obtained by performing kernel density estimation allows to identify a respective user. The above-described typing profiles can be used for identifying the person who is typing. Both the "false acceptance rate" and the "false rejection rate" are very low. Even if the user only types a rather short text, the typical features of the user's typing behavior can be identified. As a typing sample, an arbitrary text can be used. It is not necessary to use a predefined text. Another advantage of the above-described method is that it may operate in the background, to verify a user's identity.

According to a preferred embodiment, for each key, holding periods related to said key are treated as realizations of a random variable. According to another preferred embodiment, for each pair of keys, transition periods between a first key and a second key are treated as realizations of a random variable.

According to a preferred embodiment, the method further comprises the steps of extracting from the typing sample holding periods of the various keys that have been pressed; and of sorting the holding periods extracted from the typing sample into a set of first bins, each of the first bins corresponding to a certain key, the first bins being configured for storing holding periods of the respective key.

According to a preferred embodiment, for each key, the values of the holding period stored in a respective first bin are taken as realizations of a random variable related to the holding period of said key.

According to a preferred embodiment, the method further comprises the steps of extracting from the typing sample transition periods between two different keys; and of sorting the transition periods extracted from the typing sample into a set of second bins, each of the second bins corresponding to a pair of keys, the second bins being configured for storing transition periods between a first key and a second key.

According to a preferred embodiment, the method further comprises at least one of: extracting from the typing sample transition periods between two keys that have been pressed subsequently; and extracting from the typing sample transition periods between two keys that are not immediate neighbors.

According to a preferred embodiment, for each pair of keys, the values of the transition period stored in a respective second bin are taken as realizations of a random variable related to the transition period of the pair of keys.

According to a preferred embodiment, each of the keys is represented by a unique key code.

According to a preferred embodiment, the typing sample is input on a keyboard or a keypad.

According to a preferred embodiment, the typing sample is input on at least one of: a conventional keyboard, a touchscreen, a keypad, a keypad of a phone or mobile phone.

According to a preferred embodiment, the typing profile is extracted in the background while the user types an arbitrary text.

According to a preferred embodiment, Gaussian bell curves are used as kernel functions for performing the kernel density estimation.

According to a preferred embodiment, the typing profile of the user is stored in a database or in a file.

According to embodiments of the present invention, a method for comparing a typing profile of a first user with a reference typing profile of a second user is provided. The method comprises extracting a typing profile of the first user from a typing sample input by the first user according to the above-described method for extracting a typing profile from a typing sample. The method further comprises comparing the typing profile of the first user with the reference typing profile, and determining a degree of agreement between the typing profile and the reference typing profile. The method further comprises determining, in dependence on the result of the comparison, whether the typing profile matches with the reference typing profile or not.

According to a preferred embodiment, the method comprises determining, in dependence on the result of the comparison, whether the first user is identical to the second user or not.

According to a preferred embodiment, the method comprises comparing each of the probability density functions of the first user's typing profile with a corresponding probability density function of the reference typing profile.

According to a preferred embodiment, the method comprises determining, for each of the probability density functions of the first user's typing profile, a distance dimension indicating a distance between said probability density function of the first user's typing profile and a corresponding probability density function of the reference typing profile.

According to a preferred embodiment, the method further comprises determining a total distance between the first user's typing profile and the reference typing profile by calculating a sum or a weighted sum of said distance dimensions.

According to a preferred embodiment, the method further comprises comparing a total distance between the first user's typing profile and the reference typing profile with a predefined threshold.

According to a preferred embodiment, in case the total distance between the first user's typing profile and the reference typing profile is below a predefined threshold, the typing profile matches with the reference typing profile, and the first user is identical to the second user. According to another preferred embodiment, in case the total distance between the first user's typing profile and the reference typing profile is above a predefined threshold, the typing profile does not match with the reference typing profile, and the first user is not identical to the second user.

According to a preferred embodiment, the method is used for at least one of:

 detecting a defrauder by analyzing the defrauder's typing behavior;
 establishing data bases with typing profiles of a large number of users;
 detecting whether a person who has logged in is actually typing, or whether another person is typing;
 performing authentification of a user by analyzing a short typing sample of the user; automatically signing of documents in accordance with a person's typing profile;
 password hardening by evaluating a person's typing behavior in addition to password input.

According to embodiments of the present invention, a system for identifying a user according to a typing sample input by the user is provided. The system comprises a recording unit configured for recording the user's typing sample when the user types an arbitrary text, wherein said recording comprises recording point of time when the user presses or releases keys. The system further comprises a feature extraction unit configured for extracting from the typing sample a multitude of time periods, the time periods comprising at least one of holding periods of the various keys that have been pressed and transition periods between two different keys. The system further comprises a kernel density estimation unit configured for taking the holding periods of a certain key or the transition periods for a certain pair of keys as realizations of a random variable, and performing a kernel density estimation to determine a probability density function related to the holding periods of said key or to the transition periods for said pair of keys. The system further comprises a profile evaluation unit configured for comparing a typing profile of a first user with a reference typing profile of a second user, and for determining, in dependence on the result of the comparison, whether the typing profile matches with the reference typing profile or not.

For a better understanding of the present invention and to show how the same be carried into effect, reference will now be made by a way of example to the accompanying drawings in which:

Fig. 1A     shows the input of a password;

Fig. 1B     shows how a sequence of down events and up events is recorded;

Fig. 1C    shows an example of a typing sample;

Fig. 2    shows a keyboard, with key codes being assigned to the various keys of the keyboard;

Fig. 3A    gives an example of a non-masked typing sample;

Fig. 3B    gives an example of a masked typing sample;

Fig. 4A    shows how a typing profile is calculated starting from a typing sample of a known user;

Fig. 4B    shows how an unknown user is identified by comparing his typing profile with a multitude of typing profiles stored in a data base;

Fig. 5A    shows holding periods and transition periods for two subsequently pressed keys;

Fig. 5B    shows holding periods and transition periods for three subsequently pressed keys;

Fig. 6A    shows a set of bins configured for storing holding periods, with each bin corresponding to a certain key of the keyboard;

Fig. 6B    shows a set of bins configured for storing transition periods, with each bin corresponding to a pair of consecutively pressed keys;

Fig. 7A    shows a Gaussian bell curve that is used as a kernel function for performing kernel density estimation;

Fig. 7B    illustrates how kernel density estimation is performed, with the Gaussian bell curve of Fig. 7A being used as a kernel function;

Fig. 8A    shows a Gaussian bell curve with a comparatively large standard deviation;

Fig. 8B    shows a kernel density estimate obtained for the case of oversmoothing, with the Gaussian bell curve of Fig. 8A being used as a kernel function;

Fig. 9A    shows a Gaussian bell curve with a comparatively small standard deviation;

Fig. 9B    shows a kernel density estimate obtained for the case of undersmoothing, with the Gaussian bell curve of Fig. 9A being used as a kernel function;

Fig. 10    shows a cost function C(s), with the minimum of the cost function C(s) corresponding to the optimum of the fitting parameter s;

Fig. 11    illustrates a user's typing profile;

Fig. 12A    shows a typing profile of a user A;

Fig. 12B    shows a typing profile of a user B, which is compared with the typing profile shown in Fig. 12A;

Fig. 13    shows how a distance dimension between two probability density functions $f_i(x)$ and $g_i(x)$ is determined;

Fig. 14    shows total distance values $D_{total}$ between two typing profiles both for the case of identical users and for the case of two different users; and

Fig. 15    shows a sigmoidal function which is applied to the total distance values $D_{total}$.

When a person is asked to type a text on a keyboard, each person types the text in an individual manner. The way the person presses and releases the various keys of the keyboard can be regarded as a biometric feature of the person who is typing the text. Like a fingerprint, the typing behavior of a person is a highly individual feature. When two different people type a text, the typing behavior differs significantly. In fact, after typing a comparatively short text, an analysis of the typing behavior allows to unambiguously identify the person who is typing.

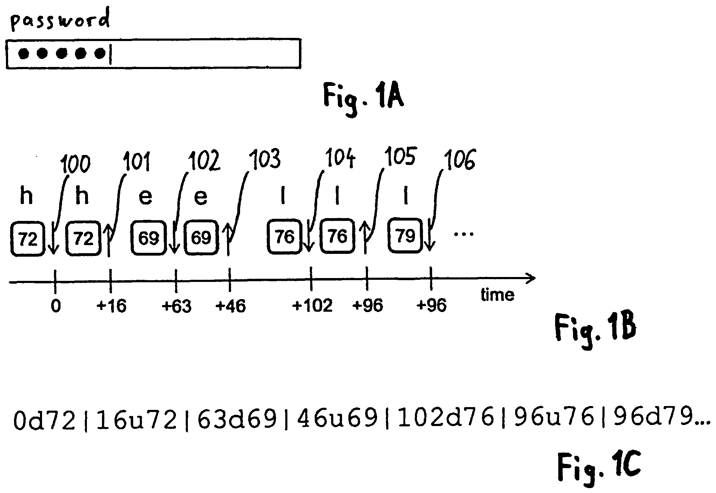

Figs. 1A, 1B and 1C show how data related to the specific typing behavior of a person is acquired. For example, as shown in Fig. 1A, the person might type a password, e.g. the word "hello". Typing the word "hello" comprises consecutively pressing and releasing the five keys "h", "e", "l", "i", and "o".

In Fig. 1B and Fig. 1C, it is shown how events related to pressing and releasing these different keys are recorded as a function of time. In particular, for each event, the time period between the current event and the preceding event may be recorded. Alternatively, for each event, the time period relative to the first key may be recorded.

As a first event, the key "h" is pressed, as indicated by arrow 100 in Fig. 1B. Pressing a key will be referred to as a "down event". For each key that is pressed or released, a corresponding key code is recorded. As shown in Fig. 1C, the event of pressing the key "h" is recorded as "0d72", with the time period "0" indicating that this event is the first event of a sequence of events, with "d" denoting a down event. In this example, the key code 72 denotes the key "h", which is true for a German keyboard. In general, the respective key code may depend on the type of keyboard that is used.

Next, as a second event, the key "h" is released, which is indicated by arrow 101 in Fig. 1B. Releasing a key will be referred to as an "up event". The relative time period between the second event and the first event is indicated as "+16", which may for example denote 16 clock cycles of a sampling clock. In Fig. 1C, the second event is recorded as "16u72", with "16" denoting the time period between the first event and the second event, with "u" indicating an up event, and with "72" denoting the key code of the key "h".

As a third event, the key "e" is pressed, which is indicated by arrow 102 in Fig. 1B. The time interval between the second event and the third event is equal to 63 clock cycles. Accordingly, as shown in Fig. 1C, the third event is recorded as "63d69", with "63" denoting the time period, with "d" denoting a "down event", and with "69" indicating the key code of the key "e".

Next, as a fourth event, the key "e" is released, which is indicated by arrow 103 in Fig. 1B. The time period between the third event and the fourth event is equal to 46 clock cycles, and accordingly, as shown in Fig. 1C, the fourth event is recorded as "46u69".

As a fifth event, the key "l" (key code 76) is pressed, as indicated by arrow 104 in Fig. 1B. Accordingly, the fifth event is recorded as "102d76" in Fig. 1C.

Next, as a sixth event, the key "l" is released, as indicated by arrow 105 in Fig. 1B. This event is recorded as "96u76" in Fig. 1C.

The process of recording a person's typing behavior is continued until the person has finished typing the typing sample. For example, the person's typing behavior may be recorded in the background, while the person is typing a typing sample. Thus, any text input can be used for acquiring a person's typing profile. As a result, the typing sample shown in Fig. 1C is obtained. For each event, the time period relative to the preceeding event, a "d" (for "down event") or an "u" (for "up event") and the key code of the respective key are indicated. A typing sample of the kind shown in Fig. 1C can be used as a starting point for determining a person's typing profile.

In general, keyboards used in different countries look different, because various language-specific character sets may be allocated to the keys of a keyboard. For example, one may think of the specific characters in the Scandinavian languages, one may think of the German umlauts, or of the Cyrillic characters used in Russia. Furthermore, also the arrangement of the characters on the keyboard may differ from country to country. For example, on European-style keyboards, the letter "y" is located in the lower left of the keyboard, whereas the letter "z" is located in the center of the upper part of the keyboard. For US-style keyboards, the respective positions of the characters "y" and "z" are exchanged.

According to embodiments of the present invention, the person's typing behavior is recorded in terms of key codes, with said key codes being assigned to the different positions of the keys on the keyboard. By using key codes, a person's typing behavior can be recorded in terms of the location of the keys on the keyboard.

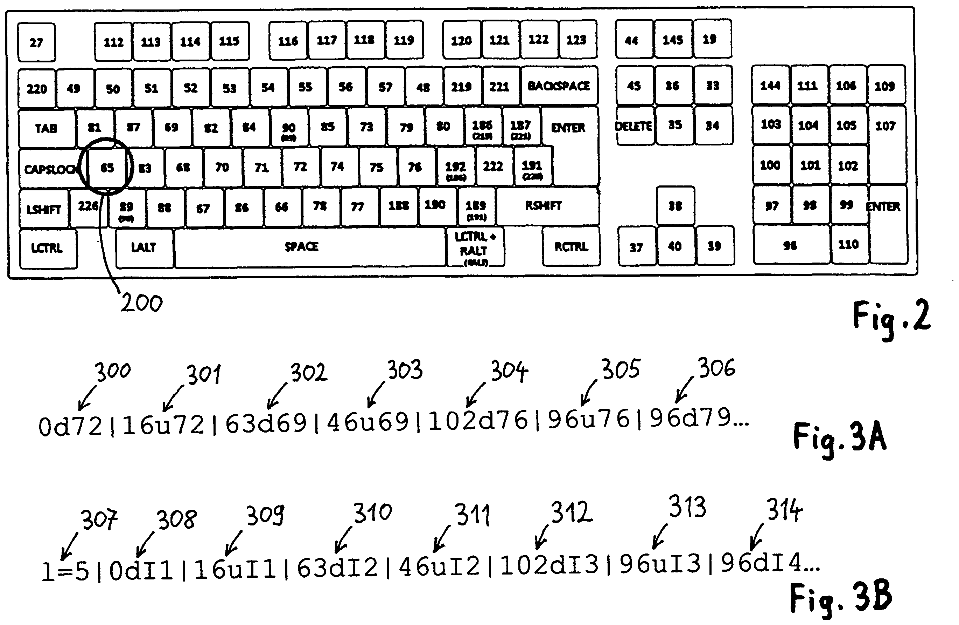

Fig. 2 shows the key codes assigned to the keys of a standard keyboard. These key codes do not depend on the respective country version of the keyboard. For example, in Fig. 2, the key 200 with the key code "65" is indicated with a circle. On a German keyboard, the key 200 corresponds to the letter "a". On a Russian keyboard, the key 200 corresponds to a specific letter of the Cyrillic alphabet. According to embodiments of the present invention, by using key codes, the typing behavior is recorded in dependence on the location of the keys, and without any dependence on the character set that is assigned to the keys of the keyboard.

In Figs. 3A and 3B, it is shown how a typing sample can either be recorded as a non-masked typing sample or as a masked typing sample. A masked typing sample is especially useful for passwords. Fig. 3A shows the recording of a non-masked typing sample comprising the entries 300 to 306, which corresponds to the typing sample shown in Fig. 1C. Each of the entries 300 to 306 comprises a relative time delay relative to the preceeding event, a letter "u" or "d" denoting an up event or a down event, and a key code of the key that has been pressed or released.

In case of a password, it is not desired to explicitly store the sequence of key codes. The sequence of key codes discloses the password, and the password should not be stored explicitly. For this reason, the acquired typing sample is stored as a masked typing sample. Fig. 3B shows an example of a masked typing sample comprising a first entry 307 denoting the length of the password and subsequent entries 308 to 314. In each of the entries 308 to 314, the key code is replaced by an index of the key that is pressed or released. For example, l1 denotes the first pressed key, l2 denotes the second pressed key, etc. Each of the entries 308 to 314 comprises a relative time delay relative to a preceeding event, a letter "u" or "d" denoting an up event or a down event, and an index of the key that has been pressed or released. Thus, it is no longer possible to retrieve the password from the stored data.

However, when the acquired typing sample is stored as a masked typing sample, control characters like e.g. "Enter", "Tab", "Shift Key" on the left side, "Shift key" on the right side, "Alt" on the left side, "Alt" on the right side, "CTRL" on the left side, "CTRL" on the right side, "Backspace", "Delete" etc. should not be masked. Storing these control characters in a non-masked manner provides advantages. For example, when entering a password, with the "Backspace" key being used at least once, the entering of the password can be reconstructed if the "Backspace" key is recorded without masking.

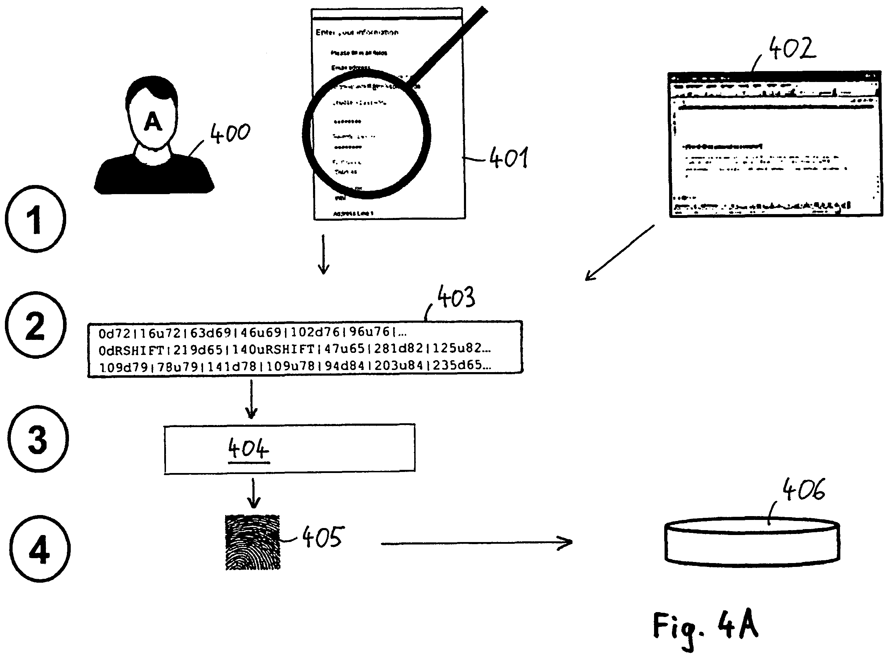

Fig. 4A shows how a typing profile of a user A is set up. In a first step, the user 400 types text into a web form 401 or into a document 402 of an application program or in any other program, for example in an e-mail program or a word processing program. In a second step, a typing sample 403 is recorded in the background. In the third step, the acquired typing sample 403 is forwarded to a core engine 404. Starting from the typing sample 403, the core engine 404 is configured for calculating a typing profile 405 of the user 400. In the fourth step, the typing profile 405 of the user 400 is stored in a user data base 406. The user data base 406 comprises user profiles for many different users.

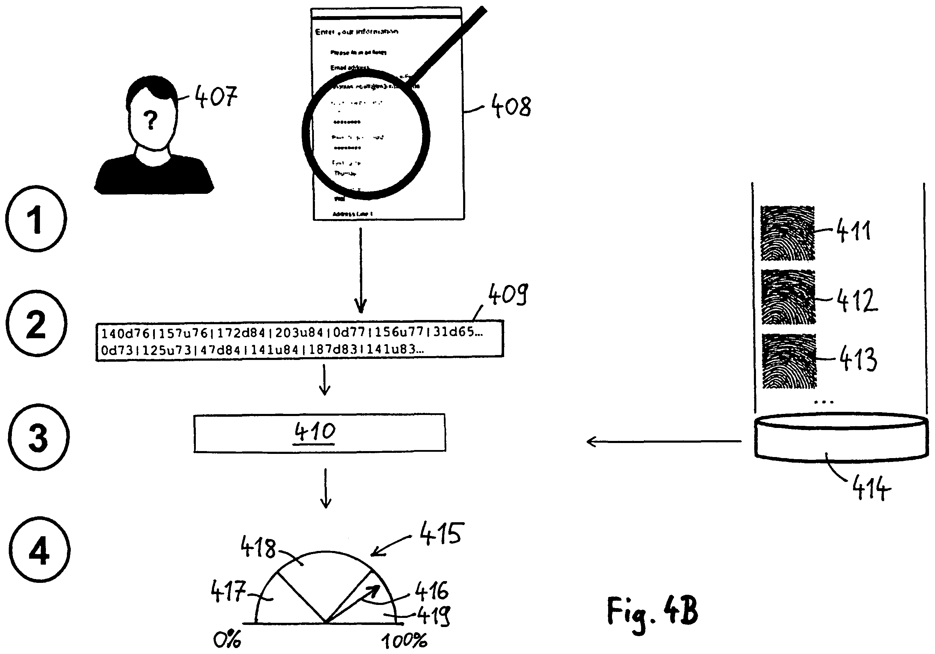

In Fig. 4B, it is shown how an unknown user can be identified by comparing the unknown user's typing sample with a number of typing samples stored in a data base. In a first step, the unknown user 407 enters text into a web form or a document 408 of an application program or in any other program, for example in an e-mail program or in a word processing program. In the second step, a typing sample 409 of the unknown user 407 is recorded in the background. In the third step, the acquired typing sample 409 of the user 407 is forwarded to the core engine 410. The core engine 410 is configured for comparing the typing sample 409 with at least one of the typing profiles 411, 412, 413 of known users. Typing profile 411 is the typing profile of user A, typing profile 412 is the typing profile of user B, and typing profile 413 is the typing profile of user C. The typing profiles 411, 412, 413 are stored in a data base 414. The core engine 410 may compare the acquired typing sample 409 with a selected one of the typing profiles stored in the data base 414. Alternatively, the core engine 410 may compare the typing sample 409 with a subset of the typing profiles stored in the data base 414. Further alternatively, the core engine 410 may compare the typing sample 409 with each of the typing profiles stored in the data base 414. The core engine 410 is configured for determining whether the typing sample 409 matches with one of the typing profiles stored in the data base 414. In case a match is detected, the unknown user 407 can be identified, because for each of the profiles 411 to 413, the corresponding users A, B, C are known.

In the fourth step, the core engine 410 outputs the result of the comparison. For example, the core engine 410 may find out that user A has typed the text with a probability of 98%.

The result of the comparison may e.g. be displayed as a graphical display element 415. The graphical element 415 indicates the probability that the typing sample 409 has been input by a certain user A. The probability is displayed by means of an arrow 416, said arrow 416 pointing to a probability value between 0% and 100%. The graphical display element 415 is divided into a red segment 417, a yellow segment 418, and a green segment 419. In case the arrow 416 lies within the red segment 417, the text has probably not been input by user A. In case the arrow 416 lies within the yellow segment 418, it is not quite sure whether the text has been input by user A or not. In case the arrow 416 lies within the green segment 419, the text has probably been input by user A. Hence, the graphical user element provides a visualization of the probability that a certain typing sample has been input by a certain user.

The core engine 404 shown in Fig. 4A is configured for extracting a typing profile 405 from the typing sample 403 of user A. Determining a user's typing profile comprises extracting a variety of different features from the rough data provided by the typing sample. In the following, it will be discussed in more detail how a user's typing profile is determined starting from the rough data of the typing sample. In particular, features related to the holding periods and the transition periods recorded for the various different keys are of particular interest for determining a user's specific typing behavior.

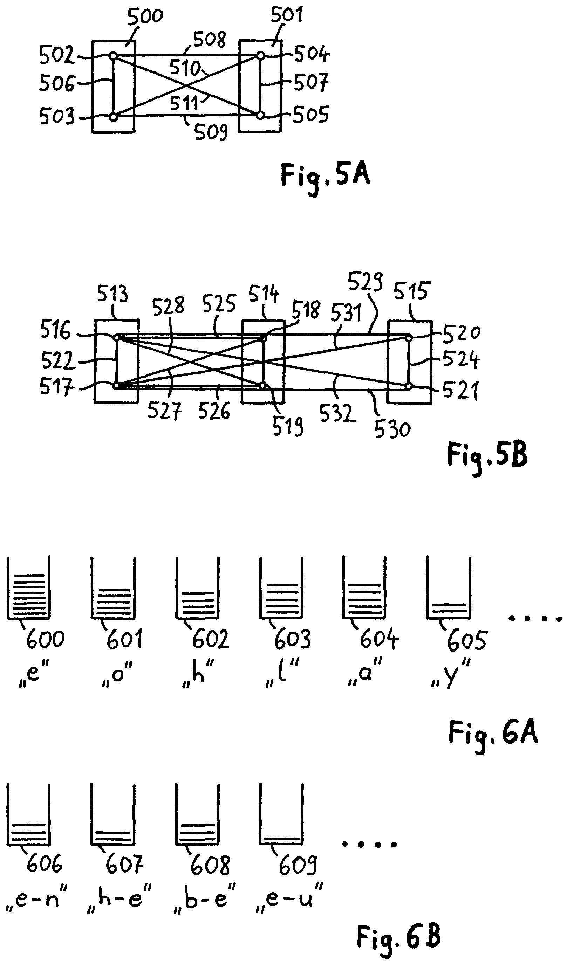

Fig. 5A illustrates the typical time periods that occur when pressing and releasing two keys subsequently. First, a first key 500 is pressed and released, and then, a second key 501 is pressed and released. Accordingly, the typing sample comprises a down event 502 and an up event 503 for the first key 500, followed by a down event 504 and an up event 505 for the second key 501. The holding period 506 indicates how long the first key 500 has been pressed. Accordingly, the holding period 506 can be obtained as a time difference between down event 502 and the up event 503. In the same way, the holding period 507 of the second key 501 can be determined as a time difference between the down event 504 and the up event 505. The holding periods 506, 507 are important features for analyzing a person's typing behavior.

Another important feature of a person's typing behavior is the transition period between the first key 500 and the second key 501. The transition period may be determined in four different ways. A first possibility is to determine a transition period 508, which is the time difference between the down event 504 and the down event 502. A second possibility is to determine a transition period 509, which is the time difference between the up event 505 and the up event 503. Further alternatively, transition periods 510, 511 may be defined as time differences between the down event 504 and the up event 503, or, further alternatively, between the up event 505 and the down event 502. In the following, only the transition period 508 will be considered for further analysis of a person's typing behaviour.

Fig. 5B shows the typical time periods that occur when subsequently pressing and releasing a sequence of three keys. First, a first key 513 is pressed and released, then, a second key 514 is pressed and released, and then, a third key 515 is pressed and released. The typing sample comprises a down event 516 and an up event 517 for the first key 513, a down event 518 and an up event 519 for the second key 514, and a down event 520 and an up event 521 for the third key 515. The holding period 522 is obtained as a time difference between down event 516 and up event 517. The holding period 522 indicates how long the first key 513 has been pressed.

In the same way, the holding periods 523 and 524 indicate how long the second key 514 and the third key 515 have been pressed, respectively.

Besides the holding periods, the transition periods between the first key 513, the second key 514 and the third key 515 are important features of a person's typing behavior. First, the transition between the first key 513 and the second key 514 is discussed. The transition period between the first key 513 and the second key 514 may be determined in four different ways. A first possibility is to determine a transition period 525, which is the time difference between the down event 518 and the down event 516. A second possibility is to determine the transition period 526, which is the time difference between the up event 519 and the up event 517. Further alternatively, transition periods 527, 528 may be defined as time differences between the down event 518 and the up event 517, or, further alternatively, between the up event 519 and the down event 516. These four possible ways of determining the transition period between the first key 513 and the second key 514 are indicated in Fig. 5B.

The transition periods between the second key 514 and the third key 515 can be determined in a similar manner. However, for reasons of clarity and to avoid confusion, the transition periods between the second key 514 and the third key 515 are not indicated in Fig. 5B.

Besides transitions between subsequently pressed keys, also transitions between two keys in a sequence of keys which are not immediate neighbors may be extracted from the sample. Transitions between any two keys which are not pressed subsequently provide characteristic features of a person's typing behavior. It has turned out that transition periods between two keys which are not immediate neighbors provide valuable information about a person's typing behavior.

For example, the transition between the first key 513 and the third key 515 may be subjected to further evaluation. Also with regard to the transition between the first key 513 and the third key 515, the transition period may be determined in four different ways. A first possibility is to determine a transition period 529, which is the time difference between the down event 520 and the down event 516. A second possibility is to determine the transition period 530, which is the time difference between the up event 521 and the up event 517. Further alternatively, transition periods 531, 532 may be defined, as indicated in Fig. 5B.

When extracting holding periods and transition periods from a typing sample, the time intervals may be used as they are. However, according to an alternative embodiment, the time intervals may as well be subjected to some kind of preprocessing, e.g. a logarithm of a respective time interval may be determined, and then, the preprocessed values may be used as "holding periods" and "transition periods".

After the respective holding periods and transition periods have been extracted from a text typed by a user, the holding periods and the transition periods are sorted into a multitude of data structures or "bins". Fig. 6A shows some of the bins configured for storing holding periods that have been extracted from the typing sample, with each of the bins being related to a specific key of the keyboard.

For example, bin 600 is configured for storing holding periods determined for key code 69, which is the key "e". In the example of Fig. 6A, bin 600 contains eight different holding periods for the key "e", which have been extracted from a typing sample input by the user.

In a similar way, bin 601 is related to the character "o", key code 79. Bin 601 is configured for storing holding periods that have been determined for the key "o". Bin 601 contains five different holding periods for the key "o", key code 79.

Bin 602 is configured for storing holding periods related to the character "h", key code 72. In the example shown in Fig. 6A, bin 602 contains four different holding periods for the character "h", which have been acquired by analyzing a typing sample entered by the user.

Bin 603 relates to key code 76, which is the key "l". In bin 603, five different holding periods for the key "l" are stored.

In a similar way, bin 604 is configured for storing holding periods for key "a", key code 65. Bin 604 contains five different holding periods.

Bin 605 corresponds to key code 89, which is the key "y". Bin 605 comprises two different holding periods acquired from the user's typing sample.

The holding periods obtained by analyzing a typing sample are sorted into a set of different bins, which each bin corresponding to a certain key of the keyboard. Thus, for each key of the keyboard, a set of different holding periods is acquired and stored in a corresponding bin.

Transition periods extracted from the typing sample are also sorted into a set of different bins. Fig. 6B shows some of the bins configured for storing transition periods related to transitions between a first key having a first key code and a second key having a second key code. A transition period is defined as the time difference between pressing the first key and pressing the second key. For example, according to a preferred embodiment, the time difference between the down event of the first key and the down event of the second key may be determined.

Each of the bins shown in Fig. 6B corresponds to a pair of consecutively pressed keys, i.e. to a certain combination of a first key and a second key, which are pressed one after the other. For example, bin 606 corresponds to the transition from key code 69 (character "e") to key code 78 (character "n"). Bin 606 is configured for storing transition periods related to the transition from "e" to "n", with the transition period being the time difference between pressing the key "e" and pressing the key "n". In the example of Fig. 6B, bin 606 contains three different values of the transition period for the transition from "e" to "n", which have been extracted from the typing sample entered by the user.

In a similar way, bin 607 is configured for storing transition periods related to the transition from key code 72 (character "h") to key code 69 (character "e"). In the example of Fig. 6B, bin 607 contains two transition periods from key "h" to key "e".

Bin 608 is related to the transition from character "b" (key code 66) to character "e" (key code 69). Bin 608 contains three values of the transition period, which have been obtained by analyzing a user's typing sample.

Bin 609 is configured for storing transition periods related to the transition from character "e" (key code 69) to character "u" (key code 85). In the example of Fig. 6B, bin 609 only contains one single value of this transition period.

Hence, for each transition from a first character to a second character, a separate bin or data structure is set up for accommodating the respective transition periods. Especially in case of a large text being used as a typing sample, the number of bins required for accommodating the transition periods may get quite large, with a plurality of these bins only containing one single value. However, though the number of bins may be regarded as being quite large, the data structure shown in Figs. 6A and 6B has proven to be useful for analyzing a person's typing behavior.

However, a person's typing behavior may change in the course of time, and therefore, a set of holding values and transition values extracted from a typing sample at an earlier point of time may not accurately reflect the person's actual typing behavior any more. According to a preferred embodiment, the typing profile is constantly adapted to the person's actual typing behavior. There exist several different ways how this can be achieved. According to a first method, whenever a new typing sample of the respective person is acquired, holding periods and transition periods are extracted from the typing sample and added to the respective bins of the person's typing profile. Thus, the number of values stored in the respective bins is steadily increasing. After the number of values in a certain bin exceeds a certain threshold, the oldest values stored in the bin may e.g. be deleted.

Thus, the values in the bins are replaced according to a "first-in first-out" scheme. The content of the bins is continuously adapted to the person's actual typing behavior. According to a second method, new values stored in a respective bin may be assigned a higher weight than older values stored in the bin. Thus, it can be achieved that old values are continuously replaced by new values, with the old values fading away.

Each of the bins 600 to 609 shown in Fig. 6A and Fig. 6B contains a certain number of values. According to embodiments of the present invention, the set of values contained in any one of the bins shown in Figs. 6A and 6B is treated as a set of observed values of a random experiment. In other words, the set of values contained in one of the bins is treated as a set of realizations of a random variable, the random variable having a certain probability distribution.

For example, bin 600 contains eight different values of the holding period for character "e", key code 69. These eight values contained in bin 600 are treated as results of the random experiment "measuring the holding period for key code 69". Hence, the eight values stored in bin 600 are taken as realizations of the holding period for key code 69, which is considered as a random variable having a certain probability distribution. In a similar way, the three values of the transition period stored in bin 606 are considered as three different realizations of another random variable having another probability distribution.

Now, the values contained in any one of the bins, which are considered as a set of realizations of a random variable, are taken as a starting point for estimating the underlying probability density distribution of the random experiment. In other words, the recorded values stored in a bin are taken as a starting point for deriving, for each bin, a most suitable estimate of the probability density function.

In case a set of realizations of a random variable is given, the underlying probability density function can be determined by a technique known as "kernel density estimation". Kernel density estimation is a way of estimating the probability density function of a random variable based on a finite data sample. In the following, it will be explained how kernel density estimation can be performed starting from a set of realizations $x_1$ to $x_n$ of a random experiment. For example, the eight values of the holding period contained in bin 600 may be taken as a set of realizations $x_1$ to $x_8$.

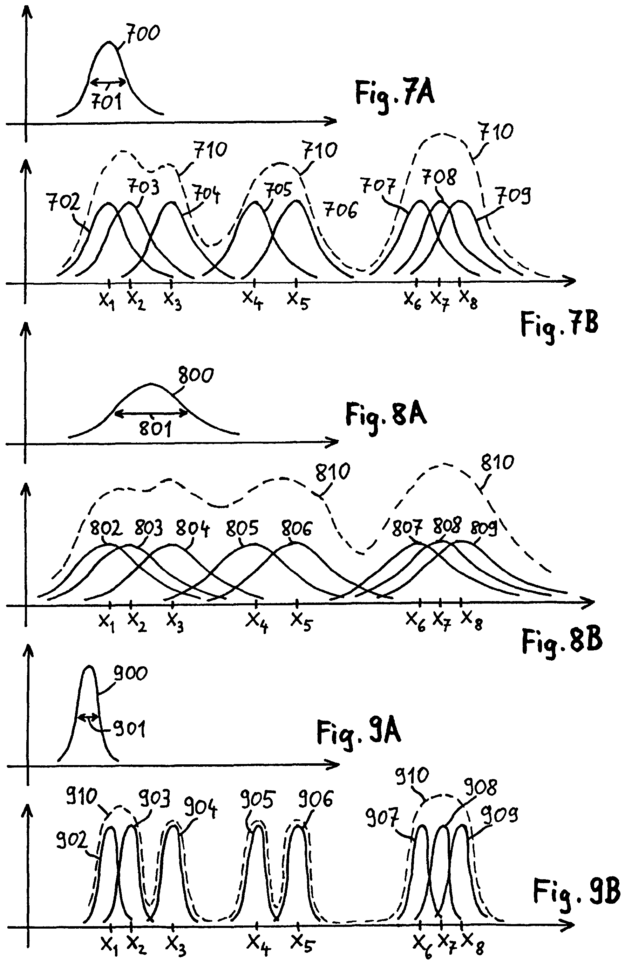

In the example shown in Fig. 7A and 7B, a Gaussian bell curve, also referred to as a Gaussian normal distribution curve, is used as a kernel function. Fig. 7A shows a standardized Gaussian bell curve 700, which can be expressed as

$$\left(\frac{s}{\sqrt{2\pi}}\right)\exp\left(-\frac{1}{2}s^2\cdot x^2\right),$$

with s being a fitting parameter of the Gaussian bell curve 700. The fitting parameter s is the inverse of the standard deviation, s = 1/. In Fig. 7A, the standard deviation 701 of the Gaussian bell curve is also indicated. The larger the standard deviation 701, the broader the Gaussian bell curve 700 will be. Gaussian bell curves of the type shown in Fig. 7A are well-suited for performing a kernel density estimation.

In Fig. 7B, it is shown how the eight recorded values $x_1$ to $x_8$ are plotted along the horizontal axis of the diagram. For determining the kernel density estimate, kernel functions 702 to 709 are placed on each of the eight values $x_1$ to $x_8$ in a way that each of the kernel functions 702 to 709 is centered at a corresponding data point $x_1$ to $x_8$. The kernel functions 702 to 709 are Gaussian bell curves of the type shown in Fig. 7A.

For obtaining the kernel density estimate, the kernel functions 702 to 709 shown in Fig. 7B are summed up. As a result, the kernel density estimate 710 is obtained, which is considered as an estimate of the probability density function of the random variable X, with $x_1$ to $x_8$ being realizations of the random variable X.

In the example shown in Figs. 7A and 7B, Gaussian bell curves have been used as a kernel function. Alternatively, a range of other kernel functions may also be used.

For example, instead of the Gaussian bell curve, uniform, triangular, biweight, triweight and epanechnikov kernels may e.g. be used as well. In general, a kernel function is a symmetric but not necessarily positive function that integrates to one. With K(x) denoting a kernel function, the kernel density estimate can be written as:

$$\hat{f}_h(x) = \frac{1}{nh}\cdot\sum_{i=1}^{n}K\left(\frac{x-x_i}{h}\right) = \frac{1}{n}\cdot\sum_{i=1}^{n}K_h\left(x-x_i\right).$$

In this equation, h>0 denotes a fitting parameter, and $K_h$ denotes a scaled kernel function:

$$K_h(x) = \frac{1}{h}\cdot K\left(\frac{x}{h}\right).$$

From Fig. 7B, it can be understood that the obtained kernel density estimate 710 strongly depends on the fitting parameter s of the Gaussian bell curve. For obtaining a good estimate of the underlying probability density function, a suitable choice of the fitting parameter s is essential. In the following, the effects of the choice of s on the obtained kernel density estimate will be discussed in more detail.

Fig. 8A shows a Gaussian bell curve 800 that is described by the following formula

$$\left(\frac{s_1}{\sqrt{2\pi}}\right)\exp\left(-\frac{1}{2}s_1^2\cdot x^2\right).$$

The fitting parameter $s_1$, of the Gaussian bell curve 800 has been chosen to be quite small, and accordingly, the standard deviation 801 of the Gaussian bell curve 800 is quite large. Fig. 8B shows what happens when the Gaussian bell curve 800 of Fig. 8A is used as a kernel function. Again, the eight data points $x_1$, to $x_8$ are protracted along the horizontal axis of the diagram, and on each of the data points $x_1$, to $x_8$, a corresponding Gaussian bell curve 802 to 809 of the kind shown in Fig. 8A is placed, wherein the center of each of the Gaussian bell curves 802 to 809 coincides with one of the data points $x_1$ to $x_8$. Next, the kernel functions 802 to 809 are summed up. Thus, a kernel density estimate 810 is obtained. It can be seen that the kernel density estimate 810 appears to be oversmoothed, which is due to the large standard deviation 801 of the kernel function 800. Because of the oversmoothing, the details of the probability density function are lost, which is not desirable. Hence, it can be concluded that the fitting parameter $s_1$ is too small.

In Fig. 9A and 9B, the opposite case is described. Fig. 9A shows a Gaussian bell curve 900, which is described by

$$\left(\frac{s_2}{\sqrt{2\pi}}\right)\exp\left(-\frac{1}{2}s_2^2 \cdot x^2\right).$$

The fitting parameter $s_2$ is chosen to be quite large, and accordingly, the standard deviation 901 of the Gaussian bell curve 900 is quite small. As shown in Fig. 9B, the Gaussian bell curve 900 can be used as a kernel function for performing a kernel density estimation. The data points $x_1$ to $x_8$ are protracted along the horizontal axis of the diagram shown in Fig. 9B, and on each of the data points $x_1$ to $x_8$, a corresponding kernel function 902 to 909 is placed, with the center of the i-th kernel function being located at the i-th data point $x_i$. Next, the kernel functions 902 to 909 are summed up, and a kernel density estimate 910 is obtained. From Fig. 9B, it can be seen that the kernel density estimate 910 is not smooth enough. In other words, the kernel density estimate 910 is undersmoothed. The kernel density estimate 910 is not a good estimate of the probability density function, because the fitting parameter $s_2$ has been chosen to be too large.

In Figs. 8A and 8B, the case of oversmoothing has been described, with the fitting parameter $s_1$ being too small. In Figs. 9A and 9B, the case of undersmoothing has been described, with the fitting parameter $s_2$ being too large. The optimum fitting parameter $s_{optimum}$ should be larger than $s_1$ and smaller than $s_2$: $s_1 < s_{optimum} < s_2$. In fact, for determining a suitable kernel density estimate, choosing a suitable value of the fitting parameter s is the most critical step in kernel density estimation. The fitting parameter s determines the degree of smoothing. There exist several different techniques for determining the optimum of the fitting parameter s. According to one of these techniques, a cost function C(s) is set up, said cost function being defined as:

$$C(s) = \sum_{i,j} \int K_s\left(x - x_i\right) \cdot K_s\left(x - x_j\right) dx - 2 \cdot \sum_{i \neq j} K_s\left(x_i - x_j\right),$$

with $x_i$, $x_j$ denoting the data points, and with $K_s(x)$ denoting a kernel function with a fitting parameter s. The first term of this formula can be replaced as follows:

$$\sum_{i,j} \int K_s\left(x - x_i\right) \cdot K_s\left(x - x_j\right) dx = \sum_{i,j} K_{s/\sqrt{2}}\left(x_i - x_j\right)$$

Hence, the cost function C(s) can be expressed as:

$$C(s) = \sum_{i,j} K_{s/\sqrt{2}}\left(x_i - x_j\right) - 2 \cdot \sum_{i \neq j} K_s\left(x_i - x_j\right),$$

which can be calculated explicitly.

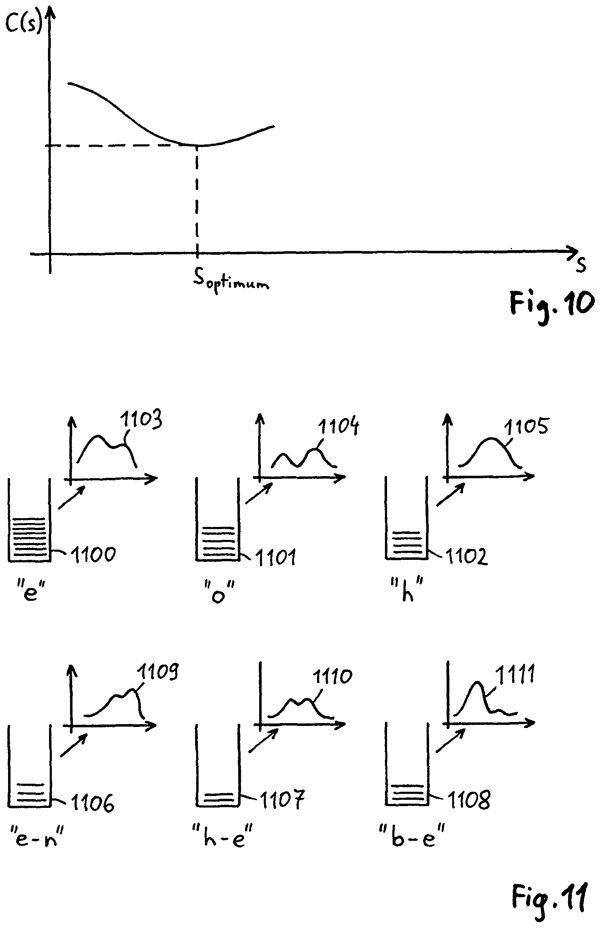

In Fig. 10, the cost function C(s) is shown in dependence on the fitting parameter s. The minimum of the cost function C(s) corresponds to an optimum $s_{optimum}$ of the fitting parameter. Hence, by determining the minimum of the cost function C(s), the optimum fitting parameter $s_{optimum}$ can be determined. In turn, once $s_{optimum}$ is known, the optimum Gaussian bell curve for performing the kernel density estimation is known as well. By using this optimum Gaussian bell curve for performing the kernel density estimation, a kernel density estimate can be determined, with said kernel density estimate having exactly the right amount of smoothing.

Now, for each one of the bins 600 to 605 shown in Fig. 6A, which are configured for storing holding periods, a kernel density estimation is performed. As a result, for each one of the bins 600 to 605, an estimate of the corresponding probability density function is obtained. In the same way, for each one of the bins 606 to 609 shown in Fig. 6B, which are configured for storing transition periods, a kernel density estimation is performed. As a result, for each one of the bins 606 to 609, an estimate of the corresponding probability density function is obtained.

The results of the kernel density estimation are illustrated in Fig. 11. In the upper part of Fig. 11, various different bins 1100, 1101, 1102 configured for storing holding periods are shown. Each of the bins 1100, 1101, 1102 contains a set of holding periods for one specific key. For example, bin 1100 contains eight holding periods for key "e", bin 1101 contains five holding periods for key "o", and bin 1102 contains four holding periods for key "h". The set of eight holding periods contained in bin 1100 is considered as a set of realizations of a random variable. Based on the eight holding periods contained in bin 1100, a kernel density estimation is performed. As a result, an estimate 1103 of a probability density function is obtained. On the horizontal axis, the holding period is indicated, and on the vertical axis, a corresponding probability density is indicated. The estimate 1103 corresponds to the set of eight holding periods stored in bin 1100.

The estimate 1103 describes the probability distribution of the holding period for key "e".

In the same way, the five holding periods stored in bin 1101 are also treated as realizations of a random variable. By performing a kernel density estimation, a corresponding probability density estimate 1104 is obtained. The probability density estimate 1104 indicates the probability distribution of the holding period for key "o".

In bin 1102, four holding periods for key "h" are stored. By performing a kernel density estimation, an estimate 1105 of the probability density function is obtained, said estimate 1105 describing the probability distribution of the holding period for key "h". In the same way, for all the remaining bins configured for storing holding periods, estimates of a corresponding probability density function are determined.

In the lower part of Fig. 11, various different bins 1106, 1107, 1108 configured for storing transition periods are shown. Bin 1106 contains three transition periods for the transition from key "e" to key "n". These three values stored in bin 1106 are taken as observed values of a random variable. By performing a kernel density estimation, an estimate 1109 of the corresponding probability density function is obtained. The estimate 1109 describes the probability distribution of the transition times stored in bin 1106.

Bin 1107 contains two transition periods for the transition "h-e". Based on these two values, a kernel density estimation is performed, and an estimate 1110 of the probability density function is obtained.

Bin 1108 contains three transition periods related to the transition "b-e". By performing a kernel density estimation, an estimate 1111 of the probability density function is determined, with the estimate 1111 indicating the probability distribution of the transition periods stored in bin 1108.

As shown in Fig. 11, a typing behavior of a user can be described by a set of probability density functions, with each of the probability density functions describing a probability distribution of a holding period or a probability distribution of a transition period. In the following, the entire set of probability density estimates extracted from a user's typing sample will be referred to as the typing profile of the user. The user's typing profile comprises at least one of probability density estimates related to holding periods and probability density estimates related to transition periods.

For example, according to a preferred embodiment, the typing profile may comprise both probability density estimates of holding periods and probability density estimates of transition periods extracted from the user's typing behavior. According to another embodiment, the typing profile may only comprise probability density estimates related to holding periods. According to yet another alternative embodiment, the typing profile may only comprise probability density estimates related to transition periods. Additionally, a typing profile may comprise further probability density estimates describing additional features extracted from the user's typing sample.

In the following, it is described how a typing profile of user A is compared with a typing profile of a user B. In case the typing profile of user A matches with the typing profile of user B, user A is identical to user B. In case the typing profiles do not match, user A is not identical to user B. For example, user A may be an unknown user, and user B may be a user whose identity is known. By detecting a match between the two typing profiles, the unknown user can be identified.

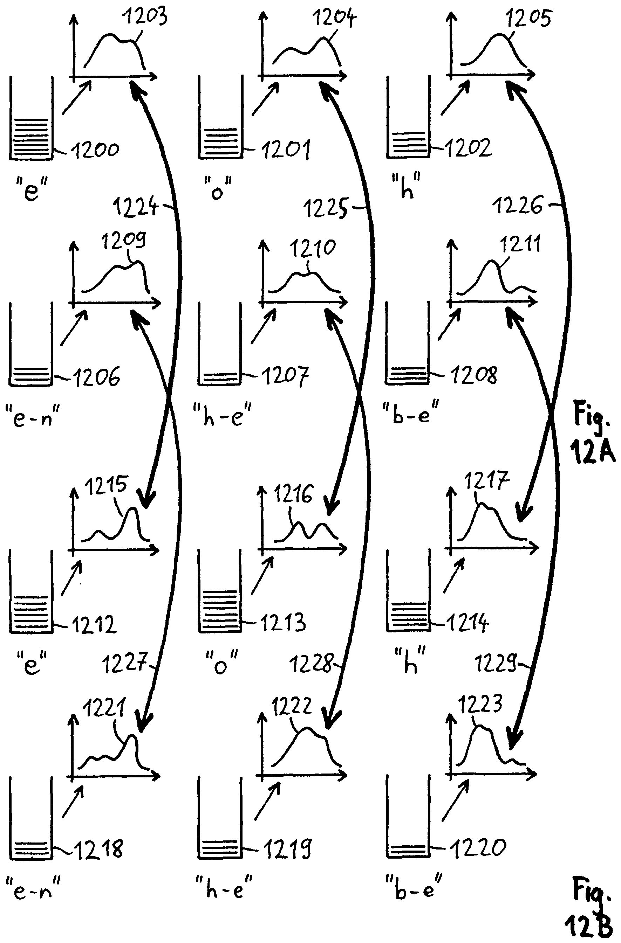

In Fig. 12A, the typing profile of user A is shown, and in Fig. 12B, the typing profile of user B is shown. Fig. 12A shows bins 1200, 1201, 1202 configured for storing holding periods. For each of the bins 1200, 1201, 1202, a corresponding probability density estimate 1203, 1204, 1205 is shown, with the probability density estimates being derived from the values contained in the corresponding bin. The probability density estimate 1203 describes the probability distribution of the holding period for key "e", the probability density estimate 1204 describes the holding period for key "o", and the probability density estimate 1205 describes the holding period for key "h". In addition to the bins 1200, 1201, 1202, there may exist further bins configured for storing holding periods, which are not shown in Fig. 12A.

The typing profile of user A further comprises bins 1206, 1207, 1208 configured for storing transition periods. For each of the bins 1206, 1207, 1208, corresponding probability density estimates 1209, 1210, 1211 are shown. Each of the probability density estimates 1209, 1210, 1211 has been derived from the transition periods stored in a corresponding bin. For example, the probability density estimate 1209 describes the transition period from "e" to "n", the probability density estimate 1210 describes the transition from "h" to "e", and the probability density estimate 1211 describes the transition from "b" to "e". The typing profile of user A shown in Fig. 12A may comprise further bins configured for storing transition periods, which are not shown in Fig. 12A.

Fig. 12B shows the typing profile for user B. The typing profile for user B comprises bins 1212, 1213, 1214 configured for storing holding periods of the keys "e", "o", "h", respectively. Together with the bins 1212 to 1214, corresponding probability density estimates 1215, 1216, 1217 are shown. The typing profile for user B further comprises bins 1218, 1219, 1220 configured for storing transition periods for the transitions "e-n", "h-e", "b-e", respectively. For each of the bins 1218 to 1220, corresponding probability density estimates 1221, 1222, 1223 are shown as well. In addition to the bins shown in Fig. 12B, the typing profile for user B may comprise further bins, which are not shown in Fig. 12B.

For comparing the two typing profiles, each of the probability density estimates of the first typing profile shown in Fig. 12A is compared with a corresponding probability density estimate of the second typing profile shown in Fig. 12B. For example, the probability density estimate 1203 of the first typing profile is compared with the probability density estimate 1215 of the second typing profile, as indicated by arrow 1224. In particular, a degree of deviation between the probability density estimate 1203 and the probability density estimate 1215 is determined. The probability density estimate 1204 is compared with the probability density estimate 1216, as indicated by arrow 1225. The probability density estimate 1205 is compared with the probability density estimate 1217, as indicated by arrow 1226. Thus, a comparison between the probability density estimates of the first and the second typing profile is performed for all the probability density estimates related to holding periods of the various keys.

In a similar manner, for all the probability density estimates related to transition periods between subsequently pressed keys, the probability density estimates of the first typing profile are compared with corresponding probability density estimates of the second typing profiles. For example, the probability density estimate 1209 is compared with the probability density estimate 1221, as indicated by arrow 1227, and a degree of deviation is determined. The probability density estimate 1210 is compared with the probability density estimate 1222, as indicated by arrow 1228, and the probability density estimate 1211 is compared with the probability density estimate 1223, as indicated by arrow 1229.

Whenever a comparison between two probability density functions is performed, a degree of deviation between the two probability density functions is determined. This may e.g. be done by determining a distance dimension of the two probability density functions.

For example, let us assume that there is a first probability density function $f_i(x)$ of the first typing profile shown in Fig. 12A, and a second probability density function $g_i(x)$ of the second typing profile shown in Fig. 12B.

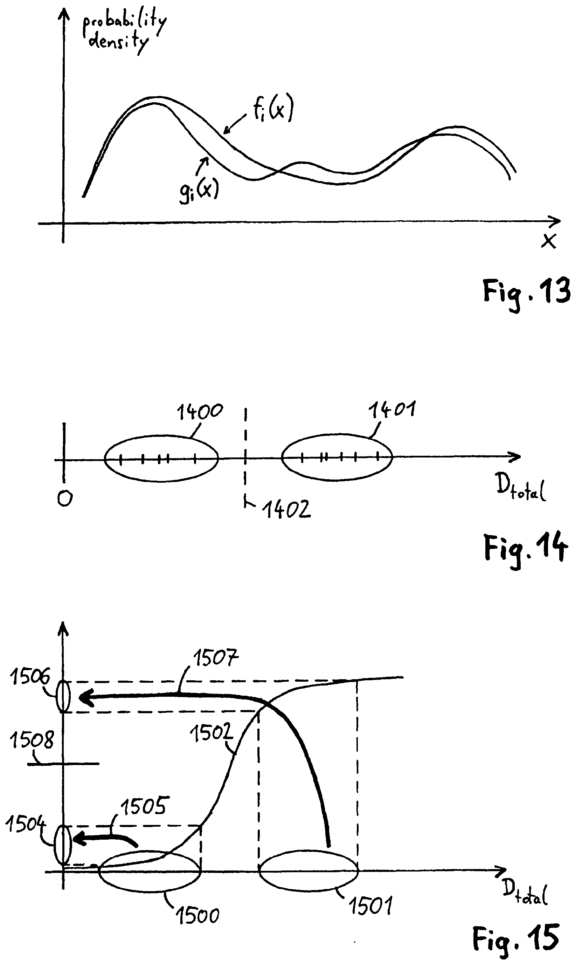

In Fig. 13, both the first probability density function $f_i(x)$ and the second probability density function $g_i(x)$ are shown. On the right-hand axis of Fig. 13, the parameter x is indicated, with x either denoting a holding period or a transition period. On the vertical axis, the corresponding probability density is indicated.

For each pair of corresponding probability density estimates $f_i, g_i$, a distance dimension $d(f_i, g_i)$ is determined. The distance dimension $d(f_i, g_i)$ indicates how far the two functions $f_i$ and $g_i$ are separated. In case $d(f_i, g_i)$ is rather small, the two probability density functions $f_i$, and $g_i$ are quite similar. In case the distance dimension $d(f_i, g_i)$ is comparatively large, the two functions $f_i$, and $g_i$ do not match.

For each pair of corresponding probability density estimates $f_i, g_i$ shown in Fig. 12A and 12B, a corresponding distance dimension $d(f_i, g_i)$ is determined. For example, the distance between the two probability density estimates 1203 and 1215, the distance between the probability density estimates 1204 and 1216, the distance between the probability density estimates 1205 and 1217 etc. are determined.

For determining the overall agreement between the first typing profile shown in Fig. 12A and the second typing profile shown in Fig. 12B, a weighted sum of the individual distance dimensions $d(f_i, g_i)$ is determined as follows:

$$D_{total} = \sum_i \omega_i \cdot d(f_i, g_i)$$

In this equation, the sum is a sum over all the probability density functions of the typing profiles. The coefficients $\omega_i$ are weight coefficients which determine the respective weight of the distance dimension $d(f_i, g_i)$. According to a first embodiment, the weight coefficients $\omega_i$ are predefined fixed weight coefficients. Alternatively, according to a second embodiment, the magnitude of the weight coefficients $\omega_i$ may be varied in dependence on the number of values contained in the corresponding bin. For example, the bins 1200 and 1212 contain 8 values and 6 values, respectively, and therefore, the weight of the distance dimension between the probability density estimates 1203 and 1215 should be quite large. Further alternatively, any other method for determining $D_{total}$ may be employed, like e.g. a machine learning method.

The weighted sum $D_{total}$ indicates the degree of agreement between the first typing profile shown in Fig. 12A and the second typing profile shown in Fig. 12B. In case the probability density estimates of the first profile differ considerably from the probability density estimates of the second profile, the distance dimensions $d(f_i, g_i)$ will be quite large, and the weighted sum $D_{total}$ will be quite large as well. In this case, there is no match between the two typing profiles, and it can be concluded that the two typing profiles have been input by different users.

In the opposite case, if there is a good agreement between the probability density estimates of the first typing profile and the probability density estimates of the second typing profile, the distance dimensions $d(f_i, g_i)$ will be quite small, and the weighted sum $D_{total}$ will be quite small as well. In this case, there is a good match between the first typing profile and the second typing profile, and it can be concluded that the two typing profiles have been input by the same user.

Based on the total distance $D_{total}$, it is possible to estimate whether the two typing profiles have been input by the same user or by different users.

A simple method for evaluating the total distance $D_{total}$ is shown in Fig. 14. Along the horizontal axis, the obtained values of $D_{total}$ are indicated. It can be seen that there is a first cluster 1400 of rather small values of $D_{total}$. Small values of $D_{total}$ are obtained when typing profiles of the same user are compared to one another. In contrast, the values of $D_{total}$ in the cluster 1401 correspond to the case where typing profiles of two different users are compared. In this case, the obtained values of $D_{total}$ are quite large. It is possible to define a threshold 1402 that is located between the first cluster 1400 and the second cluster 1401. In case the comparison of two typing profiles yields a value $D_{total}$ that

is below the threshold 1402, it can be assumed that the two typing profiles have been input by the same user. In contrast, in case the comparison of two typing profiles yields a value $D_{total}$ that is above the threshold 1402, it can be assumed that the two typing profiles have been input by two different users.

Fig. 15 shows an alternative method for evaluating the obtained values of $D_{total}$. The values of $D_{total}$ are indicated on the horizontal axis of the diagram shown in Fig. 15. The values of $D_{total}$ in the first cluster 1500 have been obtained by comparing typing profiles of one and the same user. In contrast, the values of $D_{total}$ in the cluster 1501 have been obtained by comparing typing profiles of two different users. In Fig. 15, a sigmoidal function 1502 is used for further evaluation of the values of $D_{total}$. The sigmoidal function s(x) may e.g. be expressed as:

$$s(x) = \frac{1}{1 + \exp(-A \cdot x + B)}$$

with the parameter "B" indicating the center of the sigmoidal function, and with the parameter "A" corresponding to the slope of the sigmoidal function.

Now, the sigmoidal function 1502 is applied to the values of $D_{total}$, in particular to the first cluster 1500 and to the second cluster 1501 of values $D_{total}$. By applying the sigmoidal function 1502, the first cluster 1500 is translated into a corresponding cluster 1504, as indicated by arrow 1505. The second cluster 1501 is translated into a corresponding cluster 1506, as indicated by arrow 1507. By applying the sigmoidal 1502 to the values of $D_{total}$, the differences between the first cluster 1500 and the second cluster 1501 are enhanced. The sigmoidal function 1502 is configured for enhancing the contrast between the two clusters 1500 and 1501. The resulting cluster 1504 and 1506 can be clearly and unambiguously distinguished. For example, it is possible to define a threshold 1508 that is located between the two clusters 1504 and 1506. Values within the cluster 1504 indicate that the two typing profiles have been input by one and the same person, whereas values within the cluster 1506 indicate that the two typing profiles have been input by two different persons.

**Claims**

1. A method for extracting a typing profile from a typing sample input by a user, the method comprising:

   a) recording a typing sample when the user types an arbitrary text, wherein any text input can be used, wherein said recording comprises recording points of time when the user presses or releases keys;
   b) extracting from the typing sample a multitude of time periods, the time periods comprising at least one of holding periods of the various keys that have been pressed and transition periods between two different keys, and sorting the at least one of the holding periods and the transition periods into a set of bins;
   c) taking the holding periods of a certain key or the transition periods for a certain pair of keys as realizations of a random variable, and performing a kernel density estimation to determine a probability density function related to the holding periods of said key or to the transition periods for said pair of keys;
   d) performing step c) for a multitude of different keys or pairs of keys;
   e) representing the user's typing profile as a set of probability density functions related to said multitude of different keys or pairs of keys; and
   f) constantly adapting the typing profile to the user's actual typing behaviour, with the content of the bins being constantly adapted to the user's actual typing behaviour.

2. The method of claim 1, further comprising at least one of the following features:

   for each key, holding periods related to said key are treated as realizations of a random variable;
   for each pair of keys, transition periods between a first key and a second key are treated as realizations of a random variable.

3. The method of claim 1 or claim 2, wherein the method further comprises:

   extracting from the typing sample holding periods of the various keys that have been pressed; and
   sorting the holding periods extracted from the typing sample into a set of first bins, each of the first bins corresponding to a certain key, the first bins being configured for storing holding periods of the respective key wherein, preferably, for each key, the values of the holding period stored in a respective first bin are taken as realizations of a random variable related to the holding period of said key.

4.  The method of any one of claims 1 to 3, wherein the method further comprises:

    extracting from the typing sample transition periods between two different keys;
    sorting the transition periods extracted from the typing sample into a set of second bins, each of the second bins corresponding to a pair of keys, the second bins being configured for storing transition periods between a first key and a second key, wherein the method preferably further comprises at least one of:

    extracting from the typing sample transition periods between two keys that have been pressed subsequently; and
    extracting from the typing sample transition periods between two keys that are not immediate neighbors.

5.  The method of claim 4, wherein for each pair of keys, the values of the transition period stored in a respective second bin are taken as realizations of a random variable related to the transition period of the pair of keys.

6.  The method of any one of claims 1 to 5, further comprising one or more of the following features:

    each of the keys is represented by a unique key code;
    the typing sample is input on a keyboard or a keypad;
    the typing sample is input on at least one of: a conventional keyboard, a touchscreen, a keypad, a keypad of a phone or mobile phone;
    the typing profile is extracted in the background while the user types an arbitrary text;
    Gaussian bell curves are used as kernel functions for performing the kernel density estimation;
    the typing profile of the user is stored in a database or in a file.

7.  A method for comparing a typing profile of a first user with a reference typing profile of a second user, the method comprising:

    a) extracting a typing profile of the first user from a typing sample input by the first user according to the method of claims 1 to 6;
    b) comparing the typing profile of the first user with the reference typing profile, and determining a degree of agreement between the typing profile and the reference typing profile, wherein said comparing and determining the degree of agreement comprise:

    b1) comparing each of the probability density functions of the first user's typing profile with a corresponding probability density function of the reference typing profile;
    b2) determining, for each of the probability density functions of the first user's typing profile, a distance dimension indicating how far said probability density function of the first user's typing profile and a corresponding probability density function of the reference typing profile are separated; and
    b3) determining a total distance between the first user's typing profile and the reference typing profile by calculating a sum or a weighted sum of said distance dimensions;

    c) determining, in dependence on the result of the comparison, whether the typing profile matches with the reference typing profile or not, preferably further comprising:
    determining, in dependence on the result of the comparison, whether the first user is identical to the second user or not.

8.  The method of claim 7, further comprising
    comparing a total distance between the first user's typing profile and the reference typing profile with a predefined threshold.

9.  The method of claim 7 or claim 8, further comprising at least one of the following features:

    in case the total distance between the first user's typing profile and the reference typing profile is below a predefined threshold, the typing profile matches with the reference typing profile, and the first user is identical to the second user;
    in case the total distance between the first user's typing profile and the reference typing profile is above a predefined threshold, the typing profile does not match with the reference typing profile, and the first user is not identical to the second user.

**10.** The method of any one of claims 7 to 9, wherein the method is used for at least one of the following applications:

detecting a defrauder by analyzing the defrauder's typing behavior;
establishing data bases with typing profiles of a large number of users;
detecting whether a person who has logged in is actually typing, or whether another person is typing;
performing authentification of a user by analyzing a short typing sample of the user;
automatically signing of documents in accordance with a person's typing profile;
password hardening by evaluating a person's typing behavior in addition to password input.

**11.** A system for identifying a user according to a typing sample input by the user, the system comprising:

a recording unit configured for recording the user's typing sample when the user types an arbitrary text, wherein any text input can be used, wherein said recording comprises recording points of time when the user presses or releases keys;
a feature extraction unit configured for extracting from the typing sample a multitude of time periods, the time periods comprising at least one of holding periods of the various keys that have been pressed and transition periods between two different keys, and for sorting the at least one of the holding periods and the transition periods into a set of bins;
a kernel density estimation unit configured for taking the holding periods of a certain key or the transition periods for a certain pair of keys as realizations of a random variable, and performing a kernel density estimation to determine a probability density function related to the holding periods of said key or to the transition periods for said pair of keys, wherein the user's typing profile is constantly adapted to the user's actual typing behaviour, with the content of the bins being constantly adapted to the person's actual typing behaviour;
a profile evaluation unit configured for comparing a typing profile of a first user with a reference typing profile of a second user, and for determining, in dependence on the result of the comparison, whether the typing profile matches with the reference typing profile or not.

**12.** The system of claim 11, further comprising at least one of:

the typing sample is input on a keyboard or a keypad;
the typing sample is input on at least one of: a conventional keyboard, a touchscreen, a keypad, a keypad of a phone or mobile phone.

**Patentansprüche**

**1.** Verfahren zum Extrahieren eines Tippprofils aus einer Tippprobeneingabe durch einen Nutzer, wobei das Verfahren umfasst:

a) Aufzeichnen einer Tippprobe, wenn der Nutzer einen beliebigen Text tippt, wobei irgendeine Texteingabe verwendet werden kann, wobei das Aufzeichnen das Aufzeichnen von Zeitpunkten, zu denen der Nutzer Tasten drückt oder loslässt, umfasst;
b) Extrahieren einer Vielzahl von Zeiträumen aus der Tippprobe, wobei die Zeiträume Haltezeiträume der verschiedenen Tasten, die gedrückt wurden, und/oder Übergangszeiträume zwischen zwei unterschiedlichen Tasten umfassen, und Einordnen der Haltezeiträume und/oder der Übergangszeiträume in einen Satz von Bins;
c) Übernehmen der Haltezeiträume einer bestimmten Taste oder der Übergangszeiträume für ein bestimmtes Tastenpaar als Realisierungen einer Zufallsvariablen und Durchführen einer Kerndichteschätzung zur Bestimmung einer Wahrscheinlichkeitsdichtefunktion in Bezug auf die Haltezeiträume der Taste oder die Übergangszeiträume für das Tastenpaar;
d) Durchführen von Schritt c) bei einer Vielzahl an unterschiedlichen Tasten oder Tastenpaaren;
e) Darstellen des Tippprofils des Nutzers als Satz von Wahrscheinlichkeitsdichtefunktionen in Bezug auf die Vielzahl an unterschiedlichen Tasten oder Tastenpaaren; und
f) kontinuierliches Anpassen des Tippprofils an das aktuelle Tippverhalten des Nutzers, wobei der Inhalt der Bins kontinuierlich an das aktuelle Tippverhalten des Nutzers angepasst wird.

**2.** Verfahren gemäß Anspruch 1, welches ferner wenigstens eines der folgenden Merkmale umfasst:

- für jede Taste werden Haltezeiträume in Bezug auf die Taste als Realisierungen einer Zufallsvariablen behandelt;
- für jedes Tastenpaar werden Übergangzeiträume zwischen einer ersten Taste und einer zweiten Taste als Realisierungen einer Zufallsvariablen behandelt.

3. Verfahren gemäß Anspruch 1 oder 2, wobei das Verfahren ferner umfasst:

- Extrahieren von Haltezeiträumen der verschiedenen Tasten, welche gedrückt wurden, aus der Tippprobe; und
- Einordnen der aus der Tippprobe extrahierten Haltezeiträume in einen Satz erster Bins, wobei jeder der ersten Bins einer bestimmten Taste entspricht, wobei die ersten Bins zur Speicherung von Haltezeiträumen der jeweiligen Taste konfiguriert sind, wobei vorzugsweise für jede Taste die Werte des in einem jeweiligen ersten Bin gespeicherten Haltezeitraums als Realisierungen einer Zufallsvariablen in Bezug auf den Haltezeitraum dieser Taste übernommen werden.

4. Verfahren gemäß irgendeinem der Ansprüche 1 bis 3, wobei das Verfahren außerdem umfasst:

- Extrahieren von Übergangzeiträumen zwischen zwei verschiedenen Tasten aus der Tippprobe;
- Einordnen der aus der Tippprobe extrahierten Übergangzeiträume in einen Satz zweiter Bins, wobei jeder der zweiten Bins einem Tastenpaar entspricht, wobei die zweiten Bins zur Speicherung von Übergangzeiträumen zwischen einer ersten Taste und einer zweiten Taste konfiguriert sind, wobei das Verfahren vorzugsweise ferner umfasst:

- Extrahieren von Übergangzeiträumen zwischen zwei Tasten, welche nacheinander gedrückt wurden, aus der Tippprobe; und/oder
- Extrahieren von Übergangzeiträumen zwischen zwei Tasten, welche nicht unmittelbar benachbart sind, aus der Tippprobe.

5. Verfahren gemäß Anspruch 4, wobei für jedes Tastenpaar die Werte des in einem jeweiligen zweiten Bin gespeicherten Übergangzeitraums als Realisierungen einer Zufallsvariablen in Bezug auf den Übergangzeitraum des Tastenpaares übernommen werden.

6. Verfahren gemäß irgendeinem der Ansprüche 1 bis 5, welches ferner eines oder mehrere der folgenden Merkmale umfasst:

- jede der Tasten wird durch einen einzigartigen Tastencode dargestellt;
- die Tippprobe wird auf einer Tastatur oder einem Tastenfeld eingegeben;
- die Tippprobe wird eingegeben auf: einer konventionellen Tastatur, einem Touchscreen, einem Tastenfeld und/oder einem Tastenfeld eines Telefons oder Mobiltelefons;
- das Tippprofil wird im Hintergrund extrahiert, während der Nutzer einen beliebigen Text tippt;
- es werden Gauß'sche Glockenkurven als Kernfunktionen zur Durchführung der Kerndichteschätzung verwendet;
- das Tippprofil des Nutzers wird in einer Datenbank oder in einer Datei gespeichert.

7. Verfahren zum Vergleichen eines Tippprofils eines ersten Nutzers mit einem Referenz-Tippprofil eines zweiten Nutzers, wobei das Verfahren umfasst:

a) Extrahieren eines Tippprofils des ersten Nutzers aus einer Tippprobeneingabe durch den ersten Nutzer gemäß dem Verfahren der Ansprüche 1 bis 6;
b) Vergleichen des Tippprofils des ersten Nutzers mit dem Referenz-Tippprofil und Bestimmen eines Übereinstimmungsgrads zwischen dem Tippprofil und dem Referenz-Tippprofil, wobei das Vergleichen und Bestimmen des Übereinstimmungsgrads umfassen:

b1) Vergleichen der jeweiligen Wahrscheinlichkeitsdichtefunktionen des Tippprofils des ersten Nutzers mit einer entsprechenden Wahrscheinlichkeitsdichtefunktion des Referenz-Tippprofils;
b2) Bestimmen, für die jeweiligen Wahrscheinlichkeitsdichtefunktionen des Tippprofils des ersten Nutzers, einer Abstandsgröße, welche angibt, inwieweit die Wahrscheinlichkeitsdichtefunktion des Tippprofils des ersten Nutzers und eine entsprechende Wahrscheinlichkeitsdichtefunktion des Referenz-Tippprofils auseinanderliegen; und
b3) Bestimmen eines Gesamtabstands zwischen dem Tippprofil des ersten Nutzers und dem Referenz-Tippprofil durch Berechnen einer Summe oder einer gewichteten Summe der Abstandsgrößen;

c) Bestimmen, in Abhängigkeit von dem Ergebnis des Vergleichs, ob das Tippprofil mit dem Referenz-Tippprofil übereinstimmt oder nicht, vorzugsweise ferner umfassend das Bestimmen, in Abhängigkeit von dem Ergebnis des Vergleichs, ob der erste Nutzer identisch mit dem zweiten Nutzer ist oder nicht.

8. Verfahren gemäß Anspruch 7, welches ferner umfasst:

- Vergleichen eines Gesamtabstands zwischen dem Tippprofil des ersten Nutzers und dem Referenz-Tippprofil mit einem zuvor definierten Schwellenwert.

9. Verfahren gemäß Anspruch 7 oder 8, welches ferner wenigstens eines der folgenden Merkmale umfasst:

- im Falle, dass der Gesamtabstand zwischen dem Tippprofil des ersten Nutzers und dem Referenz-Tippprofil unterhalb eines zuvor definierten Schwellenwerts liegt, stimmt das Tippprofil mit dem Referenz-Tippprofil überein und der erste Nutzer ist identisch mit dem zweiten Nutzer;
- im Falle, dass der Gesamtabstand zwischen dem Tippprofil des ersten Nutzers und dem Referenz-Tippprofil oberhalb eines zuvor definierten Schwellenwerts liegt, stimmt das Tippprofil nicht mit dem Referenz-Tippprofil überein und der erste Nutzer ist nicht identisch mit dem zweiten Nutzer.

10. Verfahren gemäß irgendeinem der Ansprüche 7 bis 9, wobei das Verfahren für wenigstens eine der folgenden Anwendungen verwendet wird:

- Nachweisen eines Betrügers durch Analysieren des Tippverhaltens des Betrügers;
- Erstellen von Datenbanken mit Tippprofilen einer großen Anzahl von Nutzern;
- Nachweisen, ob eine Person, die sich eingeloggt hat, tatsächlich tippt oder ob eine andere Person tippt;
- Durchführen der Authentifizierung eines Nutzers durch Analysieren einer kurzen Tippprobe des Nutzers;
- automatisches Unterzeichnen von Dokumenten in Übereinstimmung mit dem Tippprofil eines Nutzers;
- Passworterschwerung durch Auswertung des Tippverhaltens eines Nutzers zusätzlich zu einer Passworteingabe.

11. System zur Identifizierung eines Nutzers anhand einer Tippprobeneingabe durch den Nutzer, wobei das System umfasst:

- eine Aufzeichnungseinheit, die so konfiguriert ist, dass sie die Tippprobe eines Nutzers aufzeichnet, wenn der Nutzer einen beliebigen Text tippt, wobei irgendeine Texteingabe verwendet werden kann, wobei das Aufzeichnen das Aufzeichnen von Zeitpunkten, zu denen der Nutzer Tasten drückt oder loslässt, umfasst;
- eine Merkmalsextraktionseinheit, die so konfiguriert ist, dass sie aus der Tippprobe eine Vielzahl von Zeiträumen extrahiert, wobei die Zeiträume Haltezeiträume der verschiedenen Tasten, die gedrückt wurden, und/oder Übergangszeiträume zwischen zwei unterschiedlichen Tasten umfassen, und die Haltezeiträume und/oder die Übergangszeiträume in einen Satz von Bins einordnet;
- eine Kerndichteschätzungseinheit, die so konfiguriert ist, dass sie die Haltezeiträume einer bestimmten Taste oder die Übergangszeiträume für ein bestimmtes Tastenpaar als Realisierungen einer Zufallsvariablen übernimmt und eine Kerndichteschätzung zur Bestimmung einer Wahrscheinlichkeitsdichtefunktion in Bezug auf die Haltezeiträume dieser Taste oder die Übergangszeiträume für dieses Tastenpaar bestimmt, wobei das Tippprofil des Nutzers kontinuierlich an das aktuelle Tippverhalten des Nutzers angepasst wird, wobei der Inhalt der Bins kontinuierlich an das aktuelle Tippverhalten der Person angepasst wird;
- eine Profilevaluierungseinheit, die so konfiguriert ist, dass sie ein Tippprofil eines ersten Nutzers mit einem Referenz-Tippprofil eines zweiten Nutzers vergleicht und, in Abhängigkeit von dem Ergebnis des Vergleichs, bestimmt, ob das Tippprofil mit dem Referenz-Tippprofil übereinstimmt oder nicht.

12. System gemäß Anspruch 11, welches ferner wenigstens eines der Merkmale umfasst:

- die Tippprobe wird auf einer Tastatur oder einem Tastenfeld eingegeben;
- die Tippprobe wird eingegeben auf: einer konventionellen Tastatur, einem Touchscreen, einem Tastenfeld und/oder einem Tastenfeld eines Telefons oder Mobiltelefons.

**Revendications**

1. Procédé pour extraire un profil de dactylographie d'un échantillon de dactylographie entré par un utilisateur, le procédé comprenant :

   a) l'enregistrement d'un échantillon de dactylographie alors que l'utilisateur dactylographie un texte arbitraire, dans lequel une quelconque entrée de texte peut être utilisée, dans lequel ledit enregistrement comprend l'enregistrement de points dans le temps où l'utilisateur presse ou relâche des touches ;
   b) l'extraction de l'échantillon de dactylographie d'une multitude de périodes de temps, les périodes de temps comprenant au moins une de périodes de maintien des diverses touches qui ont été pressées et de périodes de transition entre deux touches différentes, et le tri de l'au moins une des périodes de maintien et des périodes de transition dans un ensemble de compartiments ;
   c) la considération des périodes de maintien d'une certaine touche ou des périodes de transition pour une certaine paire de touches comme des réalisations d'une variable aléatoire, et l'exécution d'une estimation de densité de noyau pour déterminer une fonction de densité de probabilité se rapportant aux périodes de maintien de ladite touche ou aux périodes de transition pour ladite paire de touches ;
   d) l'exécution de l'étape c) pour une multitude de touches ou de paires de touches différentes ;
   e) la représentation du profil de dactylographie de l'utilisateur comme un ensemble de fonctions de densité de probabilité se rapportant à ladite multitude de touches ou de paires de touches différentes ; et
   f) l'adaptation constante du profil de dactylographie au comportement actuel de dactylographie de l'utilisateur, avec le contenu des compartiments étant adapté constamment au comportement actuel de dactylographie de l'utilisateur.

2. Procédé selon la revendication 1, comprenant en outre au moins une des caractéristiques suivantes :

   pour chaque touche, des périodes de maintien se rapportant à ladite touche sont traitées comme des réalisations d'une variable aléatoire ;
   pour chaque paire de touches, des périodes de transition entre une première touche et une deuxième touche sont traitées comme des réalisations d'une variable aléatoire.

3. Procédé selon la revendication 1 ou la revendication 2, dans lequel le procédé comprend en outre :

   l'extraction de l'échantillon de dactylographie de périodes de maintien des diverses touches qui ont été pressées ; et
   le tri des périodes de maintien extraites de l'échantillon de dactylographie dans un ensemble de premiers compartiments, chacun des premiers compartiments correspondant à une certaine touche, les premiers compartiments étant configurés pour stocker des périodes de maintien de la touche respective dans lequel, préférablement, pour chaque touche, les valeurs de la période de maintien stockée dans un premier compartiment respectif sont considérées comme des réalisations d'une variable aléatoire se rapportant à la période de maintien de ladite touche.

4. Procédé selon l'une quelconque des revendications 1 à 3, dans lequel le procédé comprend en outre :

   l'extraction de l'échantillon de dactylographie de périodes de transition entre deux touches différentes ;
   le tri des périodes de transition extraites de l'échantillon de dactylographie dans un ensemble de deuxièmes compartiments, chacun des deuxièmes compartiments correspondant à une paire de touches, les deuxièmes compartiments étant configurés pour stocker des périodes de transition entre une première touche et une deuxième touche, dans lequel le procédé comprend préférablement au moins une parmi :

   l'extraction de l'échantillon de dactylographie de périodes de transition entre deux touches qui ont été pressées à la suite ; et
   l'extraction de l'échantillon de dactylographie de périodes de transition entre deux touches qui ne sont pas des voisines immédiates.

5. Procédé selon la revendication 4, dans lequel, pour chaque paire de touches, les valeurs de la période de transition stockée dans un deuxième compartiment respectif sont considérées comme des réalisations d'une variable aléatoire se rapportant à la période de transition de la paire de touches.

**6.** Procédé selon l'une quelconque des revendications 1 à 5, comprenant en outre une ou plusieurs des caractéristiques suivantes :

chacune des touches est représentée par un code de touche unique ;
l'échantillon de dactylographie est entré sur un clavier ou un pavé alphanumérique ;
l'échantillon de dactylographie est entré sur au moins un parmi : un clavier classique, un écran tactile, un pavé alphanumérique, un pavé alphanumérique d'un téléphone ou d'un téléphone mobile ;
le profil de dactylographie est extrait en tâche de fond alors que l'utilisateur dactylographie un texte arbitraire ;
des courbes en cloche de Gauss sont utilisées comme fonctions de noyau pour exécuter l'estimation de densité de noyau ;
le profil de dactylographie de l'utilisateur est stocké dans une base de données ou dans un fichier.

**7.** Procédé pour comparer un profil de dactylographie d'un premier utilisateur avec un profil de dactylographie de référence d'un deuxième utilisateur, le procédé comprenant :

a) l'extraction d'un profil de dactylographie du premier utilisateur d'un échantillon de dactylographie entré par le premier utilisateur selon le procédé des revendications 1 à 6 ;
b) la comparaison du profil de dactylographie du premier utilisateur avec le profil de dactylographie de référence, et la détermination d'un degré d'accord entre le profil de dactylographie et le profil de dactylographie de référence, dans lequel ladite comparaison et ladite détermination du degré d'accord comprennent :

b1) la comparaison de chacune des fonctions de densité de probabilité du profil de dactylographie du premier utilisateur avec une fonction de densité de probabilité correspondante du profil de dactylographie de référence ;
b2) la détermination, pour chacune des fonctions de densité de probabilité du profil de dactylographie du premier utilisateur, d'une dimension de distance indiquant de combien ladite fonction de densité de probabilité du profil de dactylographie du premier utilisateur et une fonction de densité de probabilité correspondante du profil de dactylographie de référence sont séparées ; et
b3) la détermination d'une distance totale entre le profil de dactylographie du premier utilisateur et le profil de dactylographie de référence en calculant une somme ou une somme pondérée desdites dimensions de distance ;

c) la détermination, en fonction du résultat de la comparaison, si le profil de dactylographie correspond au profil de dactylographie de référence ou non, préférablement comprenant en outre la détermination, en fonction du résultat de la comparaison, si le premier utilisateur est identique au deuxième utilisateur ou non.

**8.** Procédé selon la revendication 7, comprenant en outre la comparaison d'une distance totale entre le profil de dactylographie du premier utilisateur et le profil de dactylographie de référence avec un seuil prédéfini.

**9.** Procédé selon la revendication 7 ou la revendication 8, comprenant en outre au moins une des caractéristiques suivantes :

dans le cas où la distance totale entre le profil de dactylographie du premier utilisateur et le profil de dactylographie de référence est inférieure à un seuil prédéfini, le profil de dactylographie correspond au profil de dactylographie de référence, et le premier utilisateur est identique au deuxième utilisateur ;
dans le cas où la distance totale entre le profil de dactylographie du premier utilisateur et le profil de dactylographie de référence est supérieure à un seuil prédéfini, le profil de dactylographie ne correspond pas au profil de dactylographie de référence, et le premier utilisateur n'est pas identique au deuxième utilisateur.

**10.** Procédé selon l'une quelconque des revendications 7 à 9, dans lequel le procédé est utilisé pour au moins une des applications suivantes :

détection d'un fraudeur en analysant le comportement de dactylographie du fraudeur ;
établissement de bases de données avec des profils de dactylographie d'un grand nombre d'utilisateurs ;
détection si une personne qui a ouvert une session dactylographie effectivement, ou si une autre personne dactylographie ;
exécution d'une authentification d'un utilisateur en analysant un court échantillon de dactylographie de l'utilisateur ;

signature automatique de documents conformément à un profil de dactylographie d'une personne ;

renforcement de mot de passe en évaluant un comportement de dactylographie d'une personne en plus d'une entrée de mot de passe.

11. Système pour identifier un utilisateur conformément à un échantillon de dactylographie entré par l'utilisateur, le système comprenant :

une unité d'enregistrement configurée pour enregistrer l'échantillon de dactylographie de l'utilisateur alors que l'utilisateur dactylographie un texte arbitraire, dans lequel une quelconque entrée de texte peut être utilisée, dans lequel ledit enregistrement comprend l'enregistrement de points dans le temps où l'utilisateur presse ou relâche des touches ;

une unité d'extraction de caractéristiques configurée pour extraire de l'échantillon de dactylographie une multitude de périodes de temps, les périodes de temps comprenant au moins une de périodes de maintien des diverses touches qui ont été pressées et de périodes de transition entre deux touches différentes, et pour trier l'au moins une des périodes de maintien et des périodes de transition dans un ensemble de compartiments ;

une unité d'estimation de densité de noyau configurée pour considérer les périodes de maintien d'une certaine touche ou les périodes de transition pour une certaine paire de touches comme des réalisations d'une variable aléatoire,

et exécuter une estimation de densité de noyau pour déterminer une fonction de densité de probabilité se rapportant aux périodes de maintien de ladite touche ou aux périodes de transition pour ladite paire de touches, dans lequel le profil de dactylographie de l'utilisateur est constamment adapté au comportement actuel de dactylographie de l'utilisateur, avec le contenu des compartiments étant constamment adapté au comportement actuel de dactylographie de la personne ;

une unité d'évaluation de profil configuré pour comparer un profil de dactylographie d'un premier utilisateur avec un profil de dactylographie de référence d'un deuxième utilisateur, et pour déterminer, en fonction du résultat de la comparaison, si le profil de dactylographie correspond avec le profil de dactylographie de référence ou non.

12. Système selon la revendication 11, comprenant en outre au moins un parmi :

l'échantillon de dactylographie est entré sur un clavier ou un pavé alphanumérique ;

l'échantillon de dactylographie est entré sur au moins un parmi : un clavier classique, un écran tactile, un pavé alphanumérique, un pavé alphanumérique d'un téléphone ou d'un téléphone mobile.

password

• • • • • |

Fig. 1A

h   h   e   e   l   l   l   ...
    100   101   102   103   104   105   106

[72]  [72]  [69]  [69]  [76]  [76]  [79]  ...

0    +16   +63   +46   +102   +96   +96   time

Fig. 1B

0d72 | 16u72 | 63d69 | 46u69 | 102d76 | 96u76 | 96d79...

Fig. 1C

EP 2 771 832 B1

Fig.2

300  301  302  303  304  305  306

0d72|16u72|63d69|46u69|102d76|96u76|96d79...

Fig.3A

307  308  309  310  311  312  313  314

1=5|0dI1|16uI1|63dI2|46uI2|102dI3|96uI3|96dI4...

Fig.3B

EP 2 771 832 B1

Fig. 4A

Fig. 4B

Fig.5A

Fig.5B

Fig.6A

„e"  „o"  „h"  „l"  „a"  „y"

Fig.6B

„e-n"  „h-e"  „b-e"  „e-u"

Fig.7A

Fig.7B

Fig.8A

Fig.8B

Fig.9A

Fig.9B

Fig. 10

Fig. 11

Fig. 12A

Fig. 12B

Fig.13

Fig.14

Fig.15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080092209 A1